# DEMANDE DE BREVET EUROPEEN

(11) **EP 4 721 965 A1**
(43) Date de publication de la demande: **08.04.2026**
(21) Numéro de dépôt: 25197767.4
(22) Date de dépôt: 23.08.2025
(51) Int. Cl.: B32B 5/02, B32B 7/12, B32B 27/12, B32B 27/30

(54) **REVETEMENT DE SOL SOUPLE AVEC COUCHE D'ENVERS EN FIBRES NATURELLES NON TISSEES**

(30) Priorité: 03.10.2024 FR 2410698
(71) Demandeur: GERFLOR, 69009 Lyon (FR)
(72) Inventeur: DURAND, Sylvain, 69009 LYON (FR)
(74) Mandataire: Ipsilon

(57) **Abrégé**

L'invention concerne un revêtement de sol souple (10, 20, 30) comprenant :
- une couche de surface (1) réalisée à partir de PVC,
- une couche d'envers (3) réalisée à partir de fibres,
les couches de surface (1) et d'envers (3) étant liées entre elles par une couche médiane (2) réalisée à partir de PVC et caractérisé en ce que la couche d'envers (3) comprend des fibres naturelles.

## Description

### Domaine technique

La présente invention concerne de manière générale le domaine des revêtements de sol, en particulier les revêtements de sol souples réalisés à partir de polychlorure de vinyle (PVC).

### Art antérieur

Les revêtements de sol sont connus dans l'art antérieur. Le document EP1360366 de la demanderesse décrit notamment un revêtement comprenant une couche d'usure en PVC transparente, une couche intermédiaire obtenue à partir d'une armature imprégnée d'un plastisol gélifié sur ses deux faces et imprimée, une couche de liaison en PVC et une couche d'envers non tissée en polyester.

Toutefois, ce type de revêtement n'apporte pas entière satisfaction en termes de recyclabilité et d'utilisation de matières fossiles.

L'utilisation d'une couche d'envers non tissée en polyester permet d'obtenir un compromis entre l'atténuation acoustique et la résistance au poinçonnement intéressant pour certains marchés. Cependant, l'utilisation de ce polymère issu du pétrole contribue à l'épuisement des ressources fossiles.

Les procédés actuels de fabrication de revêtement de sols en PVC peuvent incorporer, en mélange avec de la matière vierge, une partie de revêtement en PVC déposés en fin de vie et broyés. Cependant, dans le cas de revêtements comprenant une couche non tissée en polyester liée aux couches en PVC, le produit hétérogène obtenu n'est pas incorporable par ces procédés et donc pas recyclable. En effet dans un procédé de transformation par chauffage réutilisant cette matière hétérogène, les fibres de polyester ne fondent pas aux mêmes températures que le PVC et vont créer des défauts en étant réintroduit tels quels dans des procédés de fabrication, qu'ils utilisent du polyester vierge, ou du PVC vierge.

Une alternative consiste à séparer les couches en PVC de la couche non tissée en polyester. Cependant ce type de procédé est couteux et même si le non tissée polyester est séparé celui-ci reste en partie pollué de résidus de PVC et n'est donc pas réutilisable. Dans cette alternative seule la partie en PVC est donc recyclable et le non-tissé polyester est mis au rebut.

D'autre part le comportement au feu de ce type de revêtement n'est pas satisfaisant.

La présente invention a ainsi pour but de proposer une nouvelle construction de revêtement de sol souple, améliorant les caractéristiques de résistance au feu, de recyclabilité et environnementales. L'invention vise notamment à améliorer l'impact carbone de ce type de revêtement et à diminuer leur dépendance aux ressources fossiles.

Dans un premier aspect, l'invention concerne un revêtement de sol souple comprenant :
- une couche de surface réalisée à partir de PVC,
- une couche d'envers destinée à être en contact avec le sol réalisée à partir de fibres,
les couches de surface et d'envers étant liées entre elles par une couche médiane réalisée à partir de PVC et caractérisé en ce que la couche d'envers comprend des fibres naturelles.

L'invention permet ainsi de proposer un revêtement de sol comprenant une matière renouvelable d'origine biologique tout en conservant ou en améliorant les propriétés du revêtement de sol, en particulier liées au confort à la marche, à l'isolation acoustique et thermique, à la résistance mécanique, à la planéité, à la résistance au feu, qui sont ainsi améliorées par rapport aux revêtements antérieurs.

Il est ainsi possible de remplacer les couches d'envers à base de fibres polyester de l'art antérieur par des couches d'envers réalisées à partir de fibres naturelles, que ce soit du lin, du chanvre de la jute ou tout autre matière naturelle. Les procédés actuels permettent de broyer l'ensemble du revêtement en fin de vie pour le réutiliser directement en réintroduction dans un mélange contenant du PVC vierge, en particulier dans des procédés de calandrage, pressage ou extrusion de couche réalisées à partir de PVC. Alternativement, les procédés actuels permettent la séparation de la couche d'envers, de préférence en non-tissé, des couches de surface et médiane réalisées à partir de PVC et permettent de réutiliser les fibres naturelles de l'envers (i.e. du non tissé), voire de les réintégrer dans des procédés utilisant des résines PVC.

Le revêtement de sol PVC se présente préférentiellement en rouleau, mais peut également se présenter en dalle ou lame enroulables, afin d'être facilement transportable.

L'invention peut aussi être définie selon les caractéristiques suivantes, prises individuellement ou en combinaison.

Avantageusement, la couche d'envers est réalisée à partir de fibres non tissées. L'utilisation de ce type de couche permet notamment une bonne liaison de la couche médiane à la couche d'envers du fait de l'entremêlement des fibres.

L'invention concerne de façon préférentielle un revêtement de sol comprenant une couche d'envers comprenant des fibres naturelles, de préférence réalisée à partir de fibres non tissées, ladite couche d'envers présentant une résistance à la traction supérieure à 25N, à savoir une force de rupture supérieure à 25N selon la norme ISO 1421:2016, méthode 1. Cette résistance à la rupture permet à ce type de couche de résister aux procédés en continu utilisés pour la fabrication de revêtement de sols souples et permet à la couche comprenant des fibres naturelles d'avoir une résistance mécanique suffisante pour ne pas se déchirer lors de la fabrication, notamment lors des phases de déroulage et de transport sur mandrins.

De façon préférentielle, la perméabilité à l'air de la couche d'envers est comprise entre 1000 et 3000 l/m²/s, préférentiellement entre 1500 et 2500 l/ m²/s mesurée à 200 Pa sur une surface de 20 cm² selon la norme ISO 9237. Une perméabilité à l'air inférieure à 1500 l/m²/s, voire inférieure à 1000 l/m²/s peut rendre la couche d'envers trop fermée et empêcher une bonne liaison avec la couche médiane, notamment lorsque cette couche est liée par l'intermédiaire d'une couche de liaison réalisée à partir d'un plastisol de PVC gélifié. Une perméabilité à l'air supérieure à 2500 l/m²/s, voire supérieure à 3000 l/m²/s diminue la résistance à la déchirure de la couche d'envers et peut engendrer des dissociations, des ruptures de cette couche dans le cas de trafic important ou de déplacement d'objets lourds tels que des meubles à la surface du revêtement.

De façon préférentielle, les fibres naturelles peuvent également être mélangées avec des fibres synthétiques ou minérales pour améliorer la résistance à la traction de la couche d'envers. Les fibres naturelles restent séparables des fibres synthétiques ou minérales en fin de vie dans ce cas.

La couche d'envers réalisée à partir de fibres naturelles non tissées est plus particulièrement obtenue par un procédé par voie sèche suivi d'un aiguilletage mécanique visant à lier les fibres ensembles. Ce type de procédé permet d'obtenir une meilleure tenue du revêtement de sol dans le temps, notamment une meilleure résistance au trafic et au transfert de défauts du sol recouvert vers la surface du revêtement.

Selon le type de fibre employées, leur diamètre, leur longueur, la masse surfacique de la couche d'envers réalisée à partir de fibres naturelles, et pour améliorer sa résistance à la traction, des mélanges de fibres peuvent être employés, éventuellement en combinaison avec l'ajout d'un liant entre les fibres et/ou l'utilisation de procédés mécaniques de renfort tel que l'aiguilletage.

Avantageusement, les fibres naturelles, telles que les fibres naturelles d'origine végétale ou les fibres naturelles d'origine animale, sont choisies parmi lin, chanvre, jute, bambou, coton, pulpe de bois, cellulose, soie, laine de mouton, laine d'alpaga, laine d'angora ou cachemire, seules ou en combinaison.

Avantageusement, la couche d'envers présente une épaisseur comprise entre 0,5 et 3 mm, de préférence entre 1,1 et 2,5mm.

Avantageusement, la couche d'envers présente une masse surfacique comprise entre 50 et 350 g/m², de préférence entre 150 et 250 g/m².

Notons que les fibres naturelles sont souvent plus grossières et hétérogènes, l'épaisseur minimum utile est donc plus importante que lors de l'utilisation d'une couche non tissée utilisant uniquement des fibres polyester (PET).

Avantageusement, la couche d'envers comprend entre 50 et 95 % de fibres naturelles en masse de la masse totale de la couche d'envers, voire entre 50 et 100 %.

Avantageusement, la couche d'envers comprend un mélange de fibres naturelles (d'origine biologique) et de fibres synthétiques (telles que polyester, polyamide, polypropylène), le mélange comprenant entre 50 et 95% de fibres naturelles en masse de la masse totale de la couche d'envers, voire entre 50 et 100 %.

Avantageusement, la couche d'envers comprend un mélange de fibres naturelles (d'origine biologique) et de fibres minérales (telles que fibres de verre, fibres de basalte...), le mélange comprenant entre 50 et 95% de fibres naturelles en masse de la masse totale de la couche d'envers, voire entre 50 et 100 %.

Avantageusement, la couche d'envers comprend en outre des fibres synthétiques telles que polyester, polyester enrobé, polyamide, élasthanne ou polypropylène et/ou des fibres minérales, telle que fibres de verre.

Avantageusement, la couche de surface et/ou la couche médiane est réalisée à partir d'un plastisol gélifié, de préférence un plastisol de PVC.

Avantageusement, la couche de surface comprend une couche de surface transparente, par exemple réalisée à partir d'un plastisol gélifié, de préférence un plastisol de PVC ou par extrusion ou calandrage.

Avantageusement, la couche de surface comprend en outre une couche décorative, de préférence une couche décorative imprimée.

Avantageusement, la couche de surface comprend un film PVC sur lequel est imprimé un décor en regard de la couche de surface transparente.

Avantageusement, la couche de surface comprend en outre une armature, telle qu'une armature en fibre de verre, de préférence enduite d'un plastisol de PVC gélifié sur ses deux faces et imprimée d'un décor en regard de la couche de surface transparente.

Avantageusement, la couche de surface comprend en outre une couche de verni sur sa face supérieure visible, de préférence d'une épaisseur comprise entre 10 et 30 microns et conférant à l'ensemble des propriétés spécifiques, telles que résistance aux ultraviolets, tenue à l'encrassement, à la rayure, au trafic, et/ou à l'abrasion.

Avantageusement, la couche médiane comprend une couche moussée.

Avantageusement, le revêtement de sol comprend en outre une couche de liaison réalisée à partir d'un plastisol de PVC gélifié, agencée entre la couche médiane et la couche d'envers de manière à les lier.

Avantageusement, le revêtement de sol est enroulable (ou enroulé) sur un mandrin ou sur lui-même, de préférence un mandrin de 40 mm de diamètre, plus préférentiellement un mandrin de 20 mm de diamètre.

Avantageusement, le revêtement de sol souple est suffisamment souple pour être enroulable sans défaut sur un mandrin de 120 mm de diamètre selon le critère défini dans la norme ISO 24344:2008 méthode A, de préférence sur un mandrin de 40 mm de diamètre, plus préférentiellement sur un mandrin de 20 mm de diamètre.

Dans cette méthode, la flexibilité est définie par la capacité d'un revêtement de sol à être enroulé autour d'un mandrin de 120, 40 ou 20 mm, sans que des fissures ou des craquelures ne se forment.

Un avantage de l'invention est également d'obtenir un revêtement de sol présentant un toucher doux, agréable et naturel.

D'autres caractéristiques et avantages de la présente invention apparaîtront plus clairement à la lecture de la description détaillée qui suit, de modes de réalisation de l'invention donnés à titre d'exemple nullement limitatif et illustrés par les dessins annexés.

### Brève description des dessins

[Fig. 1] représente une vue en coupe transversale d'un premier mode de réalisation du revêtement de sol.

[Fig. 2] représente une vue en coupe transversale d'un deuxième mode de réalisation du revêtement de sol,

[Fig. 3] représente une vue en coupe transversale d'un troisième mode de réalisation du revêtement de sol.

### Description détaillée de l'invention

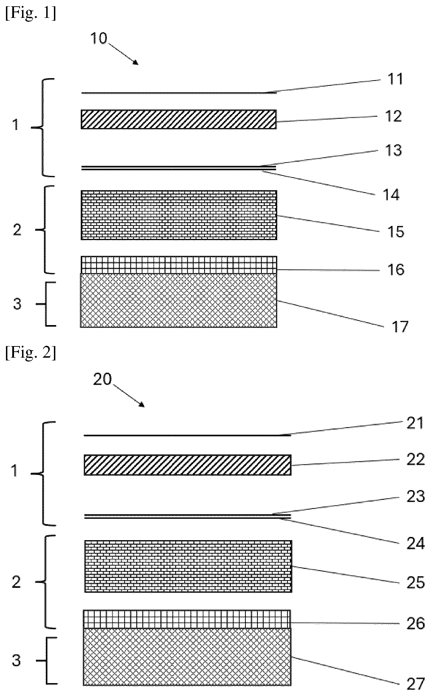

Selon les figures 1 à 3, le revêtement de sol souple (10, 20, 30) comprend :
- une couche de surface (1) réalisée à partir de PVC ;
- une couche d'envers (3) réalisée à partir de fibres naturelles, de préférence non tissées ;
les couches de surface (1) et d'envers (3) étant liées entre elles par une couche médiane (2) réalisée à partir de PVC.

Les fibres naturelles, telles que les fibres naturelles d'origine végétale ou les fibres naturelles d'origine animale, sont choisies de préférence parmi lin, chanvre, jute, bambou, coton, pulpe de bois, cellulose, soie, laine de mouton, laine d'alpaga, laine d'angora ou cachemire, seules ou en combinaison.

La couche d'envers (3) comprend de préférence entre 50 et 95 % de fibres naturelles en masse de la masse totale de la couche.

La couche d'envers (3) présente de préférence une épaisseur comprise entre 0,5 et 3 mm, de préférence entre 1,1 et 2,5mm.

La couche d'envers (3) présente de préférence une masse surfacique comprise entre 50 et 350 g/m², de préférence entre 150 et 250 g/m².

La couche d'envers (3) présente de préférence une perméabilité à l'air comprise entre 1000 et 3000 l/m²/s, préférentiellement entre 1500 et 2500 l/ m²/s mesurée à 200 Pa sur une surface de 20 cm² selon la norme ISO 9237.

Quel que soit le mode de réalisation, la couche de surface (1) et la couche médiane (2) sont liées par thermo-lamination ou par l'intermédiaire d'une couche de liaison (non représentée), telle qu'une couche de colle ou une couche de plastisol gélifiée. La couche médiane (2) est réalisée à partir de PVC, par exemple par calandrage, enduction, extrusion ou pressage.

Dans le mode de réalisation de la figure 1, le revêtement de sol (10) peut comprendre, au niveau de la couche de surface (1), une ou plusieurs couches, telles qu'une couche de vernis (11) optionnelle, une couche de surface transparente (12) obtenue à partir d'un plastisol de PVC gélifié, une couche décorative comprenant un décor imprimé (13) sur une armature (14) enduite de PVC plastisol gélifié sur ses deux faces (de préférence en fibres de verre). L'armature (14) enduite, par exemple un voile en fibres de verre, présente généralement une épaisseur comprise entre 0,5 et 1,2 mm. Le voile de verre présente généralement une masse surfacique comprise entre 30 g/m2 et 100 g/m2. La résistance à la traction d'un voile en fibres de verre est généralement choisie pour être comprise entre 100 N/50mm et 400 N/50mm dans les sens long et travers, mesurée selon la méthode ISO 1924/2 mesurée selon la méthode ISO 1924/2.

Dans le mode de réalisation de la figure 1, le revêtement de sol (10) peut comprendre, au niveau de la couche médiane (2), une ou plusieurs couches, telles que la couche médiane (15) réalisée en PVC, compact ou moussée, et/ou une couche de liaison (16) en PVC (plastisol PVC gélifié, colle thermofusible ou équivalent) pour lier la couche d'envers (3) et la couche médiane (2). Une couche de liaison assure ainsi l'interface entre deux couches pour les lier.

Dans le mode de réalisation de la figure 1, le revêtement de sol (10) peut comprendre, au niveau de la couche d'envers (3), une ou plusieurs couches réalisées à partir de fibres naturelles, telle qu'une couche réalisée à partir de fibres naturelles non tissées.

La figure 2 représente un deuxième mode de réalisation du revêtement de sol (20).

Dans le mode de réalisation de la figure 2, le revêtement de sol (20) peut comprendre, au niveau de la couche de surface (1), une ou plusieurs couches, telles qu'une couche de vernis (21) optionnelle, une couche de surface réalisée à partir d'un plastisol de PVC gélifié transparente (22), une couche décorative comprenant un décor imprimé (23) sur un film PVC (24).

Dans le mode de réalisation de la figure 2, le revêtement de sol (20) peut comprendre, au niveau de la couche médiane (2), une ou plusieurs couches, telles que la couche médiane (25) réalisée en PVC, compacte ou moussée, et/ou une couche de liaison (26) en PVC (plastisol PVC gélifié, colle thermofusible ou équivalent) pour faire la liaison avec la couche d'envers (3).

Dans le mode de réalisation de la figure 2, le revêtement de sol (20) peut comprendre, au niveau de la couche d'envers (3), une ou plusieurs couches réalisées à partir de fibres naturelles, telle qu'une couche réalisée à partir de fibres naturelles non tissées.

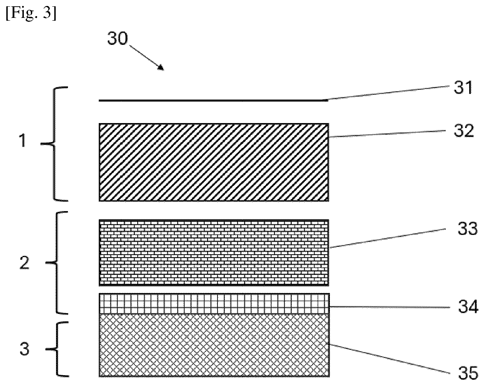

La figure 3 représente un troisième mode de réalisation du revêtement de sol (30).

Dans le mode de réalisation de la figure 3, le revêtement de sol (30) peut comprendre, au niveau de la couche de surface (1), une ou plusieurs couches, telles qu'une couche de vernis (31) optionnelle, une surface décorative (32) en PVC plastifiée. La couche décorative (32) peut être unie et est obtenue par exemple par enduction d'un plastisol teinté, par extrusion, par pressage ou par calandrage. La couche décorative (32) peut également ne pas être unie et obtenue par exemple à partir de granulés de PVC pressés.

Dans le mode de réalisation de la figure 3, le revêtement de sol (30) peut comprendre, au niveau de la couche médiane (2), une ou plusieurs couches, telles que la couche médiane (33) réalisée en PVC, compacte ou moussée, et/ou une couche de liaison (34) en PVC (obtenue à partir de plastisol de PVC gélifié, colle thermofusible ou équivalent) pour faire la liaison avec la couche d'envers (3).

Dans le mode de réalisation de la figure 3, le revêtement de sol (30) peut comprendre, au niveau de la couche d'envers (3), une ou plusieurs couches, telle qu'une couche réalisée à partir de fibres naturelles non tissées.

Quel que soit le mode de réalisation la couche de surface (1) présente une épaisseur comprise entre 0,1 et 2mm. De préférence la couche transparente (12,22), présente une épaisseur comprise entre 0,15 et 1mm, plus préférentiellement entre 0,15 et 0,7mm. De préférence, la couche de surface (1) comprend 20 à 50 PCR (Pour Cents parts de Résine PVC) de plastifiant, préférentiellement de 35 à 50 PCR de plastifiant. De préférence, la couche de surface (1) comprend moins de 15 PCR, de préférence moins de 10 PCR, plus préférentiellement moins de 7 PCR d'additifs. Ceci permet d'obtenir une bonne résistance à l'indentation résiduelle malgré la souplesse de la couche d'envers (3). Plus préférentiellement, la composition de la couche de surface (1) est constituée de 100 PCR de PVC, de 20 à 50 PCR de plastifiant, préférentiellement de 35 à 50 PCR de plastifiant et de moins de 15 PCR d'additifs, de préférence moins de 10 PCR d'additifs, plus préférentiellement moins de 7 PCR d'additifs.

Quel que soit le mode de réalisation la couche médiane (2) présente une épaisseur comprise entre 0,05 et 2mm. La couche médiane (2) comprend généralement entre 20 et 90 PCR, préférentiellement entre 35 et 55 PCR de plastifiant et un taux de charge compris entre 50 PCR et 200 PCR, préférentiellement compris entre 100 et 200 PCR. Ceci permet également d'obtenir une bonne résistance à l'indentation résiduelle malgré la souplesse de la couche d'envers (3). La couche médiane (2) présente plus préférentiellement une épaisseur comprise entre 0,05 et 0,59 mm lorsqu'elle ne comprend pas de couche moussée et une épaisseur généralement comprise entre 0,6 et 2 mm, voire entre 1 et 1,5 mm lorsqu'elle comprend au moins une couche moussée.

Quel que soit le mode de réalisation, le revêtement de sol souple (10, 20, 30) présente de préférence une épaisseur comprise entre 1 et 6 mm, préférentiellement entre 2 et 4,5mm.

D'autres exemples de réalisation de la présente invention sont listés ci-dessous.

### Exemple 1 :

Revêtement de sol avec une couche d'envers (3) réalisée à partir de lin, d'épaisseur 1,35 mm et de masse surfacique 180 g/m² dont la composition est de 85% de fibres de lin et de 15% de fibres Polyester en masse de la couche d'envers.

La proportion de fibres de lin peut également se situer entre 50 et 100% de lin, préférentiellement entre 60 et 85% de fibres de lin. La proportion de fibres polyester se situe entre 0 et 50%, préférentiellement entre 15 et 40%.

A noter que la quantité de fibres polyester peut être constituée de fibres vierges ou recyclées ainsi que de fibres bi composants qui permettent d'assurer et de renforcer la tenue mécanique de la couche d'envers. Les fibres bi composants sont constitués de deux types de polyester présentant des températures de fusion différentes.

### Exemple 2 :

Revêtement de sol avec une couche d'envers (3) en base chanvre d'épaisseur 1,20 mm et de masse surfacique 200 g/m² dont la composition est de 70% de fibres de chanvre et de 30% de fibres polyester.

La proportion de fibres de chanvre peut également se situer entre 50 et 100% de chanvre, préférentiellement entre 60 et 85% de fibres de chanvre. La proportion de fibres polyester se situe entre 0 et 50%, préférentiellement entre 15 et 40%.

A noter que la quantité de fibres polyester peut être constituée de fibres vierges ou recyclées ainsi que de fibres bi-composants (fibres polyester enrobées) qui permettent d'assurer et de renforcer la tenue mécanique du produit.

### Exemple 3 :

Revêtement de sol avec une couche d'envers (3) réalisé à partir de fibres de jute d'épaisseur 0,6 mm et de masse surfacique 250 g/m² dont la composition est de 100% fibres de jute.

### Exemple 4 :

Un revêtement de sol selon la figure 1 d'épaisseur totale de 2 mm est réalisé.

Le revêtement comprend :
- Une couche transparente (12) en plastisol de PVC gélifié de 0,3mm ;
- Une armature de voile de verre (14) enduite d'un plastisol de PVC gélifié sur ses deux faces et imprimée (13) sur sa face en regard de la couche transparente (12), d'une épaisseur de 0,6mm ;
- Une couche médiante comprenant une couche réalisée à partir de PVC et compacte (15) de 0,1 mm ainsi qu'une couche de liaison (16) en plastisol de PVC gélifié de 0,4 mm dont environ 0,1 mm d'épaisseur est imprégné dans la couche d'envers pour la lier ;
- Une couche d'envers (3,17) réalisée à partir de fibre de lin non tissée et aiguilletées d'une épaisseur de 0,7 mm dont environ 0,1 mm d'épaisseur est imprégnée dans la couche de liaison. La couche d'envers (3,17) est une couche en fibres naturelles non tissées de lin d'une masse surfacique de 200 g/m².

Le revêtement ainsi réalisé est testé selon trois critères, l'isolation acoustique, la sonorité à la marche et la résistance au feu.

**[Tableau 1]**

| **Méthode d'essai** | **Caractéristiques techniques** | **Unités** | ***Résultats*** |
|---|---|---|---|
| NF EN ISO 717-2 mai 2013 / NF EN ISO 10140-3 mars 2013 | Isolation acoustique | dB | **12 dB à 20.7°C** |
| NF EN 16205 Aout 2013 / NF EN 16205/IN1 Mai 2018 | Sonorité à la marche | dB | **68 dB à 20.7°C** |
| NF EN ISO 9239-1 février 2013 | Réaction au feu | classe | **BfIS1** |
| | CHF (kW/m²) | | **9.29** |
| | Densité des fumées (%°min) | | **108.5** |

A titre de comparaison, un revêtement similaire dont la couche d'envers (3) est réalisée entièrement à partir de polyester de 200g/m² n'atteint que la classe CfIS1 de résistance au feu. Les performances d'isolation acoustique et de sonorité à la marche sont comparables.

### Exemple 5 :

Deux revêtements de sols A et B selon la figure 1 d'épaisseur totale de 2 mm sont réalisés.

Les revêtements A et B comprennent :
- Une couche transparente (12) en plastisol de PVC gélifié de 0,3mm ;
- Une armature de voile de verre (14) enduite d'un plastisol de PVC gélifié sur ses deux faces et imprimée (13) sur sa face en regard de la couche transparente (12), d'une épaisseur de 0,2 mm ;
- Une couche médiane comprenant une couche réalisée à partir de PVC et compacte (15) de 0,5 mm ainsi qu'une couche de liaison (16) en plastisol de PVC gélifié de 0,4 mm dont environ 0,1 mm de l'épaisseur est imprégnée dans la couche d'envers pour la lier ;
- Une couche d'envers (3,17) réalisée à partir de fibres de lin non tissées et aiguilletées d'une épaisseur de 0,7 mm dont environ 0,1 mm de l'épaisseur est imprégnée dans la couche de liaison.
La couche d'envers (3,17) du revêtement A est une couche en fibres naturelles non tissées composée à 75 % en poids de fibres de lin et à 25% en poids de fibres bi-composant (fibres polyester enrobées de polyester), d'une masse surfacique de 180 g/m² et d'une perméabilité à l'air de 2150 l/m²/s. La couche d'envers (3,17) du revêtement B est une couche en fibres naturelles non tissées composée à 60 % en poids de fibres de lin et à 20% en poids de fibres bi-composant (fibres polyester enrobées de polyester), 20% en poids de fibres de polytéréphtalate d'éthylène recyclé, d'une masse surfacique de 180 g/m² et d'une perméabilité à l'air de 2150 l/m²/s.

La résistance à la délamination des revêtements A et B est testée. Il est constaté une résistance à la délamination entre couches selon la norme NF EN ISO 24345 April 2012 ce qui montre une bonne liaison de la couche d'envers avec la couche médiane. D'autre part, la résistance au test de chaise à roulette selon NF EN 425 juillet 2002 / NF EN 985 décembre 2001 / ISO 4918 Mars 2016 est supérieure à 25000 cycles et ce, sans délamination de couches, y compris de la couche d'envers (3), ni apparition de défauts.

Le revêtement selon l'invention permet donc d'intégrer un composant issu de matière première naturelle réalisée à partir de lin, chanvre, ou tout autre matière naturelle d'origine biologique, végétale ou animale. L'invention permet ainsi d'améliorer les performances du revêtement par rapport à l'art antérieur, à savoir l'ensemble des points mentionnés ci-avant ainsi que la résistance au feu.

On comprendra que diverses modifications et/ou améliorations évidentes pour l'homme du métier peuvent être apportées aux différents modes de réalisation de l'invention décrits dans la présente description.

Notons enfin qu'il est possible de combiner les modes de réalisations autant que possible ou nécessaire.

## Revendications

1. Revêtement de sol souple (10, 20, 30) comprenant :
- une couche de surface (1) réalisée à partir de PVC,
- une couche d'envers (3) réalisée à partir de fibres,
les couches de surface (1) et d'envers (3) étant liées entre elles par une couche médiane (2) réalisée à partir de PVC,
**caractérisé en ce que** la couche d'envers (3) comprend des fibres naturelles.

2. Revêtement de sol (10, 20, 30) selon la revendication précédente, **caractérisé en ce que** la couche d'envers (3) présente une résistance à la traction supérieure à 25N selon la norme ISO 1421:2016, méthode 1.

3. Revêtement de sol (10, 20, 30) selon la revendication précédente, **caractérisé en ce que** la couche d'envers (3) est réalisée à partir de fibres non tissées.

4. Revêtement de sol (10, 20, 30) selon l'une des revendications précédentes, **caractérisé en ce que** la couche d'envers (3) présente une perméabilité à l'air comprise entre 1000 et 3000 l/m²/s, préférentiellement entre 1500 et 2500 l/ m²/s mesurée à 200 Pa sur une surface de 20 cm² selon la norme ISO 9237.

5. Revêtement de sol (10, 20, 30) selon l'une des revendications précédentes, **caractérisé en ce que** les fibres naturelles, telles que les fibres naturelles d'origine végétale ou les fibres naturelles d'origine animale, sont choisies parmi lin, chanvre, jute, bambou, coton, pulpe de bois, cellulose, soie, laine de mouton, laine d'alpaga, laine d'angora ou cachemire, seules ou en combinaison.

6. Revêtement de sol (10, 20, 30) selon l'une des revendications précédentes, **caractérisé en ce que** la couche d'envers (3) présente une épaisseur comprise entre 0,5 et 3 mm, de préférence entre 1,1 et 2,5mm.

7. Revêtement de sol (10, 20, 30) selon l'une des revendications précédentes, **caractérisé en ce que** la couche d'envers (3) présente une masse surfacique comprise entre 50 et 350 g/m², de préférence entre 150 et 250 g/m².

8. Revêtement de sol (10, 20, 30) selon l'une des revendications précédentes, **caractérisé en ce que** la couche d'envers (3) comprend entre 50 et 95 % de fibres naturelles en masse de la masse totale de la couche.

9. Revêtement de sol (10, 20, 30) selon l'une des revendications précédentes, **caractérisé en ce que** la couche d'envers (3) comprend en outre des fibres synthétiques telles que polyester, polyester enrobé, polyamide, élasthanne ou polypropylène ; et/ou des fibres minérales, telle que des fibres de verre.

10. Revêtement de sol (10, 20, 30) selon l'une des revendications précédentes, **caractérisé en ce que** la couche de surface (1) comprend en outre une couche décorative (13, 23, 32), de préférence une couche décorative imprimée.

11. Revêtement de sol (10, 20, 30) selon l'une des revendications précédentes, **caractérisé en ce que** la couche de surface (1) comprend un film PVC (24) imprimé.

12. Revêtement de sol (10, 20, 30) selon l'une des revendications 10 à 11, **caractérisé en ce que** la couche décorative comprend en outre une armature (14), telle qu'une armature en fibre de verre, de préférence enduite d'un plastisol de PVC gélifié sur ses deux faces.

13. Revêtement de sol (10, 20, 30) selon l'une des revendications précédentes, **caractérisé en ce qu'il** comprenant en outre une couche de liaison (16, 26, 34) réalisée à partir d'un plastisol de PVC gélifié, agencée entre la couche médiane (2) et la couche d'envers (3) pour les lier.

14. Revêtement de sol (10, 20, 30) selon l'une des revendications précédentes, **caractérisé en ce qu'il** est enroulable sans défaut sur un mandrin de 120 mm de diamètre selon le critère défini dans la norme ISO 24344:2008 méthode A, de préférence un mandrin de 40 mm de diamètre, plus préférentiellement un mandrin de 20 mm de diamètre.
